# EUROPEAN PATENT APPLICATION

(11) **EP 4 586 338 A1**
(43) Date of publication of application: **16.07.2025**
(21) Application number: 24737857.3
(22) Date of filing: 11.04.2024
(51) Int. Cl.: H01M 4/38, H01M 4/36, H01M 4/62, H01M 4/13, H01M 4/133, H01M 4/134

(54) **COMPOSITE POROUS MATERIAL AND USE THEREOF, SILICON-BASED COMPOSITE MATERIAL, NEGATIVE ELECTRODE, AND BATTERY**

(30) Priority: 24.11.2023 CN 202311596058
(71) Applicant: Lanxi Zhide Advanced Materials Co., Ltd., Jinhua, Zhejiang 321100 (CN)
(72) Inventor: FANG, Bing, Jinhua Zhejiang 321100 (CN); CHEN, Qinghua, Jinhua Zhejiang 321100 (CN); LIU, Ruifang, Jinhua Zhejiang 321100 (CN)
(74) Representative: Locas, Davide
(86) International application number: PCT/CN2024/087287
(87) International publication number: WO 2025/107485

(57) **Abstract**

The present invention provides a composite porous material and use thereof, a silicon-based composite material, a negative electrode and a battery, and specifically relates to the field of secondary battery technologies. The composite porous material contains composite porous material particles, and the composite porous material particles are obtained by compounding two (A and B) or more porous materials of different pore structures; distribution of the porous material A and the porous material B in the composite porous material particles is not limited; and a pore volume of the porous material A is greater than that of the porous material B. The composite porous material provided in the present invention is obtained by compounding two materials with different pore volumes, so that a pore volume size of the prepared composite porous material has a gradient difference, which facilitates controlling load of a material in pores and solving material change caused by the load.

## Description

### CROSS-REFERENCE TO RELATED APPLICATION

The present invention claims the priority to Application No. 2023115960582 filed with the Chinese Patent Office on November 24, 2023 and entitled "COMPOSITE POROUS MATERIAL AND USE THEREOF, SILICON-BASED COMPOSITE MATERIAL, NEGATIVE ELECTRODE AND BATTERY", the contents of which are incorporated herein by reference in entirety.

### TECHNICAL FIELD

The present invention relates to the field of secondary battery technologies, and particularly to a composite porous material and use thereof, a silicon-based composite material, a negative electrode (anode) and a battery.

### BACKGROUND ART

At present, due to quite high theoretical specific capacity (4200 mAh/g), silicon is expected to replace graphite to become a next-generation high-specific-energy lithium-ion-battery negative electrode material, to meet requirements on high capacity and long service lifetime of lithium-ion batteries on the current market.

However, silicon may generate large volume expansion/shrinkage during repeated lithium intercalation/lithium deintercalation, the expansion in full lithium intercalation may reach up to 300%, and repeated overlarge volume change causes repeated formation of solid electrolyte interface of a composite material, and thus the battery capacity is attenuated, and cycle performance is deteriorated. The high-capacity silicon-based composite material has a high content of silicon, and meanwhile the expansion problem brought by high silicon load is also particularly severe, thus affecting practical application of the batteries.

By dispersing a silicon material in a porous material to prepare the silicon-based composite material, the size of the silicon material may be restricted and slow down silicon expansion of lithium intercalation to a certain extent. Porous materials are materials of a network structure composed of interconnected or closed pores. The porous materials in the prior art mostly have regular pore structures and good performance homogeneity, but when the porous materials are used for preparing a silicon-based negative electrode material, the regular pore structures lead to a substantially consistent silicon deposition amount, volume change is synchronously carried out during lithium intercalation/lithium deintercalation, stress generated by expansion or shrinkage is likely to cause an impact on the pore structures of the porous material, which affects structural stability thereof, and further affects various electrochemical performances of the secondary battery, particularly prominent in cases with a high content of silicon. Therefore, how to effectively relieve expansion stress of high-silicon negative electrode and obtain good cycle stability is a technical problem to be solved at present.

In view of this, the present invention is specifically proposed.

### SUMMARY

The first objective of the present invention is to provide a composite porous material, compounded by porous materials of different pore structures.

A second objective of the present invention is to provide use of a composite porous material in a battery negative electrode material, a hydrogen storage material, an adsorption material, a catalyst support, an energy-saving material, a separation material or drug loading.

The third objective of the present invention is to provide a silicon-based composite material compounded by silicon-based materials with different silicon contents, so as to solve the problem that the composite material with a uniform silicon content has too large expansion during lithium intercalation when the silicon content is high in the prior art, and improve the cycle stability of the silicon-based composite material.

The fourth objective of the present invention is to provide a negative electrode.

The fifth objective of the present invention is to provide a battery.

In order to achieve the above objectives of the present invention, the following technical solutions are particularly adopted.

In the first aspect, the present invention provides a composite porous material, wherein the composite porous material contains composite porous material particles, and the composite porous material particles are obtained by compounding two or more porous materials of different pore structures; the composite porous material particles at least include a porous material A and a porous material B, and distribution of the porous material A and the porous material B in the composite porous material particles is not limited; and a pore volume of the porous material A is greater than that of the porous material B.

Further, the porous material A is a porous carbon material; and the porous material B is at least one of a porous carbon material, a porous metal oxide, a porous metal oxysalt or a porous metal.

Preferably, the porous carbon material is at least one of a porous carbon material prepared by pyrolyzing and/or activating a polymer as a precursor, a porous carbon material prepared by pyrolyzing and/or activating a biomass as a precursor, a porous carbon material prepared by further pyrolyzing and/or activating fossil fuel, and the like. The porous carbon material includes, but is not limited to, hard carbon, amorphous carbon, carbon black, graphite, graphene, carbon nanotube, coconut shell charcoal, and the like. The porous metal oxide includes, but is not limited to, at least one of porous aluminum oxide, porous silicon dioxide and porous magnesium oxide. The porous metal includes, but is not limited to, at least one of foamed nickel, porous titanium and porous copper.

Further, a ratio of a mass of the porous material A to that of the porous material B is from 0.1 to 200.

Preferably, in the composite porous material particles, the porous material A and the porous material B are distributed in a staggered manner and form an AB network structure, wherein the ratio of the mass of the porous material A to that of the porous material B is from 0.1 to 10.

Alternatively, the porous material B wraps the porous material A to form an A@B core-shell structure, wherein the ratio of the mass of the porous material A to that of the porous material B is from 20 to 200.

Alternatively, the porous material A and the porous material B are distributed in a staggered manner and form an AB network structure, and a porous material C is present and wraps the AB network structure to form an AB@C network-core-shell composite structure, wherein the ratio of the mass of the porous material A to that of the porous material B is from 0.1 to 10, and a ratio of a total mass of the porous material A and the porous material B to a mass of the porous material C is from 20 to 200.

Further, the pore volume of the porous material A is 0.3~3.0 cm³/g, and the pore volume of the porous material B is 0.05~0.65 cm³/g.

Preferably, in the porous material A, a proportion of pores with a pore size less than 10 nm in a total pore volume of the porous material A is 60~100 %.

Preferably, in the porous material B, a proportion of pores with a pore size less than 10 nm in a total pore volume of the porous material B is 60~100 %.

In the second aspect, the present invention provides use of the composite porous material in a battery negative electrode material, a hydrogen storage material, an adsorption material, a catalyst support, an energy-saving material, a separation material or drug loading.

In the third aspect, the present invention provides a silicon-based composite material, wherein the silicon-based composite material contains silicon-based composite material particles, the silicon-based composite material particles contain a composite porous matrix and a nano-silicon material dispersed in pore channels of the porous matrix, the composite porous matrix at least contains a component A and a component B, correspondingly, the silicon-based composite material particles at least includes a region A and a region B, the region A includes the component A of the composite porous matrix and the nano-silicon material dispersed in the pore channels thereof, the region B includes the component B of the composite porous matrix and the nano-silicon material dispersed in the pore channels thereof; and a content of the nano-silicon material, in percentage by mass, in the region A is greater than a content of the nano-silicon material, in percentage by mass, in the region B.

Further, the composite porous matrix is of the composite porous material according to the first aspect of the present invention. Preferably, the component A in the composite porous matrix is the porous material A, and the component B in the composite porous matrix is the porous material B.

Further, the region A and the region B are distributed in a staggered manner and form an AB network structure, wherein a ratio of a mass of the region A to that of the region B is from 0.1 to 10.

Alternatively, the region B wraps the region A to form an A@B core-shell structure, wherein a ratio of a mass of the region A to that of the region B is from 20 to 200.

Alternatively, the region A and the region B are distributed in a staggered manner and form an AB network structure, and a region C is present and wraps the AB network structure to form an AB@C network-core-shell composite structure, wherein a ratio of a mass of the region A to that of the region B is from 0.1 to 10, and a ratio of a total mass of the region A and the region B to a mass of the region C is from 20 to 200

Further, the nano-silicon material is obtained by chemical vapor deposition of a silicon-containing precursor on the composite porous matrix at 150~1000 °C. Preferably, the silicon-containing precursor is one or more selected from the group consisting of monosilane, disilane, trisilane, halosilane, polysilane, silole and derivatives thereof, and silafluorene and derivatives thereof.

Further, a content of the nano-silicon material in the region A is 30~90 wt.%; and a content of the nano-silicon material in the region B is 0~50 wt.%.

Further, the silicon-based composite material further includes a heteroatom X deposited in the pore channels of the composite porous material, and the heteroatom X is a non-silicon element.

Preferably, the heteroatom X belongs to non-metal elements.

Preferably, the non-metal elements include at least one of B, N, P, O and S.

Preferably, in the silicon-based composite material, a content of the heteroatom X is 0~10 wt.%. Further preferably, the content of the heteroatom X is 0~5 wt.%.

Preferably, the heteroatom X in the pore channels of the composite porous material is obtained by chemical vapor deposition of a silicon-containing precursor and a heteroatom-containing precursor on the composite porous matrix at 150~1000 °C.

Further, the silicon-based composite material has a specific surface area of 0.1~50 m²/g and a pore volume of 0.001~0.5 cm³/g. Preferably, the silicon-based composite material has a specific surface area of 0.1~5 m²/g and a pore volume of 0.001~0.05 cm³/g.

And/or the silicon-based composite material has a true density of 1.3~3.0 g/cm³ and a closed-pore volume of 0.01~0.30 cm³/g.

And/or the silicon-based composite material particles have *d*_{*V,*50} of 5~20 µm and a span (*d*_{*V,*90}*-d*_{*V,*10})/*d*_{*V,*50} of 0.7~2.0. Preferably, the silicon-based composite material has a median particle size *d*_{*V,*50} of 6~12 µm and a span (*d*_{*V,*90}*-d*_{*V,*10})/*d*_{*V,*50} of 0.7~1.2.

And/or a compacted specific surface area of the silicon-based composite material is 1 to 20 times a specific surface area, preferably 1~10 times, more preferably 1~5 times.

And/or a content of silicon element in the silicon-based composite material is 10~90 wt.%. Preferably, the content of the silicon element in the silicon-based composite material is 30~70 wt.%.

And/or the silicon-based composite material further includes a coating layer located on a surface of the silicon-based composite material. Preferably, a material of the coating layer is at least one selected from the group consisting of a solid electrolyte, a conductive polymer, a carbonaceous material, a metal, an alloy, a metal oxide, a metal hydroxide, a halogen-containing compound, a nitrogen-containing compound, a phosphorus-containing compound, a boron-containing compound and a sulfur-containing compound. Further preferably, the material of the coating layer is a carbonaceous material.

In the fourth aspect, the present invention provides a negative electrode, wherein the negative electrode contains a negative electrode active material, and the negative electrode active material includes the silicon-based composite material according to the third aspect.

In the fifth aspect, the present invention provides a battery, wherein the battery includes a positive electrode, a negative electrode, a separator and an electrolytic solution, the negative electrode contains a negative electrode active material, and the negative electrode active material includes the silicon-based composite material according to the third aspect.

Compared with the prior art, the present invention at least has the following beneficial effects:

The composite porous material provided in the present invention is obtained by compounding at least two materials with different pore volumes, so that a pore volume of the prepared composite porous material is sized to be regionally different, which facilitates realization of other controllable physical and chemical properties in different regions, and realization of region-controllable load when serving as a porous support, thereby achieving multi-level control and use of the material.

The composite porous material provided in the present invention can be applied to battery negative electrode materials, hydrogen storage materials, adsorption materials, catalyst supports, energy-saving materials, separation materials, the drug loading or other fields, and the composite porous material with better performances is provided to the above fields, which promotes the development of the above fields and broadens application ranges of downstream industries.

For the silicon-based composite material provided in the present invention, by using the composite porous material having region-controllable pore volume and pore size as the matrix, after deposition of silicon, the silicon-based composite material having region-controllable distribution of silicon content is formed. In lithium-ion battery application of the composite material particles, regions with different silicon contents have different expansion during lithium intercalation, and a region with a low silicon content has less expansion, which can buffer large expansion in a region with a high silicon content during lithium intercalation, so that the expansion inside the composite material particles is relieved, and the structural stability and cycle stability of the composite material are improved. Further, the composite porous material can be prepared into a network structure, a core-shell structure or other special structures according to different pore volumes and particle size distribution, based on which vapor deposition of silicon is carried out, and in the formed composite material, regions with different silicon contents are staggered and form the network structure or wrap to form the core-shell structure. These particular structures can allow designing distribution regions with different silicon contents in the composite material, and form periodical or gradient distribution of the silicon contents, which further optimizes a buffer mechanism for silicon expansion during lithium intercalation and improves structural stability and cycle stability of the composite material.

In another aspect, different components of the composite porous matrix may also have different pore distribution ratios of micropores, mesopores and macropores, which can allow designing different distribution of sizes of the silicon nanoparticles in the silicon-based composite material, thereby achieving region-controllable distribution of silicon contents and silicon nanoparticle sizes in the composite material, further providing a buffer mechanism for silicon expansion during lithium intercalation and improving structural stability and cycle stability of the composite material.

In a further aspect, composite porous matrixes obtained from different precursors also have different microstructures inside porous material bulks, such as a carbon layer structure of a carbon material, including microcosmic information such as an interlayer distance and a graphitization degree; a crystalline phase structure of a porous oxide, and the like, and further combinations of these microcosmic structures render a network structure, a core-shell structure or other special structures, which is also an important property of the composite porous matrix. After the composite porous matrix is siliconized, a resulting silicon-based composite material inherits the microporous structures of the composite porous matrix, and these porous matrix components of different microstructures also play an important role in giving play to overall performance of the silicon-based composite material.

In the battery provided in the present invention, by using the silicon-based composite material with better performances, the specific capacity of the secondary battery is improved, energy (capacity) density and cycling performance of the battery are improved, and the development of downstream industries is promoted.

### BRIEF DESCRIPTION OF DRAWINGS

In order to more clearly illustrate technical solutions of examples of the present invention, drawings which need to be used in the examples will be briefly introduced below. It should be understood that the drawings merely show some examples of the present invention, and thus should not be considered as limitation to the scope. Those ordinarily skilled in the art still could obtain other relevant drawings according to these drawings, without using any inventive efforts.
FIG. 1 shows an SEM image of a composite porous material provided in Example 1 of the present invention; and
FIG. 2 shows an SEM image of a composite porous material provided in Example 2 of the present invention.

### DETAILED DESCRIPTION OF EMBODIMENTS

Embodiments of the present invention will be described in detail below in combination with examples, while those skilled in the art would understand that the following examples are merely used for illustrating the present invention, but should not be considered as limitation to the scope of the present invention. The examples, for which specific conditions are not specified, are carried out under conventional conditions or manufacturer-recommended conditions. Where manufacturers of reagents or apparatus used are not specified, they are commercially available conventional products.

Endpoints and any value of ranges disclosed herein are not limited to the precise ranges or values, and these ranges or values should be understood as encompassing values close to these ranges or values. For numerical ranges, endpoint values of various ranges can be combined with each other, endpoint values of various ranges and individual point values can be combined with each other, and individual point values can be combined with each other to obtain one or more new numerical ranges, and such numerical ranges should be construed as specifically disclosed herein.

In the first aspect, the present invention provides a composite porous material. The composite porous material contains composite porous material particles, wherein the composite porous material particles are obtained by compounding two or more porous materials of different pore structures; the composite porous material particles at least include a porous material A and a porous material B, and distribution of the porous material A and the porous material B in the composite porous material particles is not limited; and a pore volume of the porous material A is greater than that of the porous material B.

The composite porous material provided in the present invention is obtained by compounding two materials with different pore volumes, so that a pore volume of the prepared composite porous material is sized to be regionally different, which facilitates realization of other controllable physical and chemical properties in different regions, and realization of region-controllable load when serving as a porous support, thereby achieving multi-level control and use of the material.

In the composite porous material defined in the present invention, the pore volume of the porous material A is greater than that of the porous material B. Interiors of pore channels of the porous materials are places for loading a second phase, and a pore volume size thereof determines a magnitude of load. When the composite porous material is used as a matrix of a silicon-based negative electrode material for performing chemical vapor deposition, in a resulting silicon-based composite material, an amount of silicon loaded in the porous material A will be greater than an amount of silicon loaded in the porous material B.

In some examples, the porous material A is a porous carbon material; and the porous material B is at least one of a porous carbon material, a porous metal oxide, a porous metal oxysalt or a porous metal.

Preferably, in some examples, the porous carbon material is at least one of a porous carbon material prepared by pyrolyzing and/or activating a polymer as a precursor, a porous carbon material prepared by pyrolyzing and/or activating a biomass as a precursor, a porous carbon material prepared by further pyrolyzing and/or activating fossil fuel, and the like. In some examples, the porous carbon material includes, but is not limited to, hard carbon, amorphous carbon, carbon black, graphite, graphene, carbon nanotube, coconut shell charcoal, and the like.

In some examples, the porous metal oxide includes, but is not limited to, at least one of porous aluminum oxide, porous silicon dioxide, porous magnesium oxide, and the like. In some examples, the porous metal oxysalt includes, but is not limited to, at least one of porous lithium titanate, porous aluminum phosphate, porous lithium phosphate, porous lithium aluminum phosphate, porous titanium lithium aluminum phosphate, and the like. In some examples, the porous metal includes, but is not limited to, at least one of foamed nickel, porous titanium, porous copper, and the like. In some examples, the porous metal oxide or the porous metal oxysalt is derived from metal hydroxide, metal carbonate, bi-metal hydroxide, multi-metal hydroxide, and the like. In some examples, the porous metal oxide or the porous metal oxysalt is derived from a sol or slurry of metal hydroxide, metal carbonate, bi-metal hydroxide, multi-metal hydroxide, metal phosphate, metal nitrate, and the like.

In some examples, a ratio of a mass of the porous material A to that of the porous material B is from 0.1 to 200. Typically, but not by way of limitation, the ratio of the mass of the porous material A to that of the porous material B is typically, but not by way of limitation, 0.1, 0.5, 1, 10, 20, 30, 40, 50, 60, 70, 80, 90, 100, 120, 150, 180, 200 or a range value between any two thereof.

Preferably, in some examples, in the composite porous material particles, the porous material A and the porous material B are distributed in a staggered manner and form an AB network structure, wherein the ratio of the mass of the porous material A to that of the porous material B is from 0.1 to 10.

In some examples, the porous material B wraps the porous material A to form an A@B core-shell structure, wherein the ratio of the mass of the porous material A to that of the porous material B is from 20 to 200.

In some examples, the porous material A and the porous material B are distributed in a staggered manner and form an AB network structure, and a porous material C is present and wraps the AB network structure to form an AB@C network-core-shell composite structure, wherein the ratio of the mass of the porous material A to that of the porous material B is from 0.1 to 10, and a ratio of a total mass of the porous material A and the porous material B to a mass of the porous material C is from 20 to 200.

In some examples, the pore volume of the porous material A is 0.3~3.0 cm³/g, and the pore volume of the porous material B is 0.05~0.65 cm³/g.

In the above, the pore volume of the porous material A may be, for example, 0.3 cm³/g, 0.6 cm³/g, 0.9 cm³/g, 1.2 cm³/g, 1.5 cm³/g, 1.8 cm³/g, 2.1 cm³/g, 2.4 cm³/g, 2.7 cm³/g, 3.0 cm³/g or a range value between any two thereof; the pore volume of the porous material B may be, for example, 0.05 cm³/g, 0.1 cm³/g, 0.15 cm³/g, 0.2 cm³/g, 0.25 cm³/g, 0.3 cm³/g, 0.35 cm³/g, 0.4 cm³/g, 0.5 cm³/g, 0.6 cm³/g, 0.65 cm³/g or a range value between any two thereof.

Preferably, in some examples, in the porous material A, a proportion of pores with a pore size less than 10 nm in a total pore volume is 60~100 %. Typically, but not by way of limitation, in the porous material A, the proportion of the pores with a pore size less than 10 nm in the total pore volume may be, for example, 60%, 70%, 80%, 90%, 100% or a range value between any two thereof.

In some examples, in the porous material B, a proportion of pores with a pore size less than 10 nm in a total pore volume is 60~100 %. Typically, but not by way of limitation, in the porous material B, the proportion of the pores with a pore size less than 10 nm in the total pore volume may be, for example, 60%, 70%, 80%, 90%, 100% or a range value between any two thereof.

In the second aspect, the present invention provides use of the composite porous material according to the first aspect of the present invention in a battery negative electrode material, a hydrogen storage material, an adsorption material, a catalyst support, an energy-saving material, a separation material or drug loading.

The composite porous material provided in the present invention, due to its designable, regionally distributed pore channel structures and specific surface areas, can realize other controllable physical and chemical properties in different regions, so that its use in the battery material, the hydrogen storage material, the adsorption material, the catalyst support, the energy-saving material, the separation material, the drug loading and other fields has excellent plasticity, and thus the composite porous material with better performances is provided for the above fields, the development of the above fields is promoted, and application ranges of downstream industries are broadened. When the composite porous material is used as a porous support, a region-controllable load can be realized, thereby achieving multi-level control and use of the composite material. Typically, when the composite porous material is used for a porous matrix of a silicon-based negative electrode material, a resulting composite material can realize region-controllable silicon content distribution, alleviate expansion of a silicon-based material during lithium intercalation in lithium battery application, and improve structural stability and cycle stability thereof.

In another aspect, different components of the composite porous material may also have different pore distributions. For example, in some examples, the porous material A is dominated by mesopores, the porous material B is dominated by micropores, or the porous material A and the porous material B have different distribution ratios of micropores, mesopores and macropores, which will provide more possibilities for multi-faceted applications of the composite porous material.

In a further aspect, the composite porous materials obtained from different precursors also have different microstructures inside porous material bulks, such as a carbon layer structure of a carbon material, including microcosmic information such as an interlayer distance and a graphitization degree; a crystalline phase structure of a porous oxide, and the like, and further combinations of these microcosmic structures render a network structure, a core-shell structure or other special structures, which is also an important property of the composite porous material, and can provide a wider application space therefor.

When the composite porous material of the present invention is used as a hydrogen storage material, its designable, regionally distributed pore channel structures and specific surface areas can improve a storage amount of hydrogen and optimize distribution of hydrogen. Likewise, the composite porous material, when serving as a catalyst support, can achieve quantitative delivery of a catalyst in regions with different pore volumes, which controls reaction rate more accurately.

The energy-saving material mentioned in the present invention includes, but is not limited to, a silencer material or a sound-insulation material. Because the regions of the composite porous material have gradient or periodically different pore volumes, when sound is incident on a surface of the composite porous material, one part is reflected off the surface of the composite porous material, the other part is propagated into interiors of gradient pore structures, to cause vibration of air in pore openings, and due to viscosity and heat conduction effect, acoustic energy is converted into thermal energy and consumed. The gradient pore structures make acoustic waves to be repeatedly propagated and make energy to be continuously converted and consumed, and in this way, an effect of acoustic absorption is achieved.

When the composite porous material provided in the present invention serves as a separation material, due to the design of regional distribution of the pore volume, different trapping sites can be provided for different to-be-separated materials respectively, thereby greatly improving separation selectivity.

In drug loading of the composite porous material provided in the present invention, by virtue of the regionally distributed controllable pore structures, a primary drug and an excipient can be selectively designed to be loaded in specific regions respectively, and thus an operation space of the drug loading is improved, and the drug is easy to bind to a targeting ligand and easy to exert an effect in cells.

In the third aspect, the present invention provides a silicon-based composite material. The silicon-based composite material contains silicon-based composite material particles. The silicon-based composite material particles contain a composite porous matrix and a nano-silicon material dispersed in pore channels of the porous matrix. The composite porous matrix at least contains a component A and a component B, and correspondingly, the silicon-based composite material particles at least include a region A and a region B, wherein the region A includes the component A of the composite porous matrix and the nano-silicon material dispersed in the pore channels thereof, the region B includes the component B of the composite porous matrix and the nano-silicon material dispersed in the pore channels thereof; and a content of the nano-silicon material, in percentage by mass, in the region A is greater than a content of the nano-silicon material, in percentage by mass, in the region B.

The silicon-based composite material provided in the present invention uses the composite porous material having region-controllable pore volume and pore size as the matrix, and after deposition of silicon, the silicon-based composite material having region-controllable distribution of silicon content is formed. In lithium-ion battery application of the composite material particles, regions with different silicon contents have different expansion during lithium intercalation, and a region with a low silicon content has less expansion, which can buffer large expansion in a region with a high silicon content during lithium intercalation, so that the expansion inside the composite material particles is relieved, and the structural stability and cycle stability of the composite material are improved.

In another aspect, different components of the composite porous matrix may also have different pore distributions. For example, in some examples, the component A is dominated by mesopores and the component B is dominated by micropores, or the component A and the component B have different distribution ratios of micropores, mesopores and macropores, which can allow designing different distributions of sizes of the silicon nanoparticles in the silicon-based composite material, thereby achieving region-controllable distribution of silicon contents and silicon nanoparticle sizes in the composite material, further providing a buffer mechanism for silicon expansion during lithium intercalation and improving structural stability and cycle stability of the composite material.

In a further aspect, composite porous matrixes obtained from different precursors also have different microstructures inside porous material bulks, such as a carbon layer structure of a carbon material, including microcosmic information such as an interlayer distance and a graphitization degree; a crystalline phase structure of a porous oxide, and the like, and further combinations of these microcosmic structures render a network structure, a core-shell structure or other special structures, which is also an important property of the composite porous matrix. After the composite porous matrix is siliconized, a resulting silicon-based composite material inherits the microporous structures of the composite porous matrix, and these porous matrix components of different microstructures also play an important role in giving play to overall performance of the silicon-based composite material.

In some examples, for the silicon-based composite material provided in the present invention, the composite porous matrix therein is of the composite porous material according to the first aspect of the present invention; preferably, the component A in the composite porous matrix is the porous material A according to the first aspect of the present invention, and the component B in the composite porous matrix is the porous material B according to the first aspect of the present invention.

In some examples, in the silicon-based composite material provided in the present invention, the region A and the region B are distributed in a staggered manner and form an AB network structure, wherein a ratio of a mass of the region A to that of the region B is from 0.1 to 10.

In some examples, the region B wraps the region A to form an A@B core-shell structure, wherein a ratio of a mass of the region A to that of the region B is from 20 to 200.

In some examples, the region A and the region B are distributed in a staggered manner and form an AB network structure, and a region C is present and wraps the AB network structure to form an AB@C network-core-shell composite structure, wherein a ratio of a mass of the region A to that of the region B is from 0.1 to 10, and a ratio of a total mass of the region A and the region B to a mass of the region C is from 20 to 200.

In some examples, the nano-silicon material is obtained by chemical vapor deposition of a silicon-containing precursor on the composite porous matrix at 150~1000 °C. Preferably, in some examples, the silicon-containing precursor is one or more selected from the group consisting of monosilane, disilane, trisilane, halosilane, polysilane, silole and derivatives thereof, and silafluorene and derivatives thereof. Preferably, in some examples, the silicon-containing precursor is in contact with the porous matrix at a temperature of 200~700 °C.

In some examples, a content of the nano-silicon material, in percentage by mass, in the region A is 30~90%; and a content of the nano-silicon material, in percentage by mass, in the region B is 0~50%. The regionally distributed silicon content is determined by the regionally distributed pore volume in the composite porous matrix. In the present invention, the regionally distributed silicon content is a primary factor for controlling and buffering the expansion of silicon in the composite material particles during lithium intercalation.

Typically, but not by way of limitation, in some examples, the content of the nano-silicon material, in percentage by mass, in the region A may be, for example, 30%, 40%, 50%, 60%, 70%, 80%, 90% or a range value between any two numerical values thereof; the content of the nano-silicon material, in percentage by mass, in the region B may be, for example, 0, 10%, 20%, 30%, 40%, 50% or a range value between any two numerical values thereof, where the content of 0 indicates that the nano-silicon material is not deposited in the region B.

In some examples, the silicon-based composite material further includes a heteroatom X deposited in the pore channels of the composite porous material, wherein the heteroatom X is a non-silicon element.

Preferably, in some examples, the heteroatom X belongs to non-metal elements.

Preferably, in some examples, the non-metal elements include at least one of B, N, P, O and S.

Preferably, in some examples, in the silicon-based composite material, a content of the heteroatom X is 0~10 wt.%. Further preferably, in some examples, the content of the heteroatom X is 0~5 wt.%.

Preferably, in some examples, the heteroatom X in the pore channels of the composite porous material is obtained by chemical vapor deposition of a silicon-containing precursor and a heteroatom-containing precursor on the composite porous matrix at 150~1000 °C. Preferably, in some examples, the silicon-containing precursor and the heteroatom-containing precursor are in contact with the porous matrix at a temperature of 200~700 °C. The silicon-containing precursor is one or more selected from the group consisting of monosilane, disilane, trisilane, halosilane, polysilane, silole and derivatives thereof, and silafluorene and derivatives thereof. The heteroatom-containing precursor is a precursor containing the heteroatom element and is introduced in a form of gas. In some examples, the heteroatom-containing precursor includes at least one of an oxygen-containing precursor, a carbon-containing precursor, a nitrogen-containing precursor, a phosphorus-containing precursor, a sulfur-containing precursor or a boron-containing precursor.

The silicon-containing precursor and the heteroatom-containing precursor are in contact with the porous matrix in such a manner that: the silicon-containing precursor and the heteroatom-containing precursor are alternately contacted with the porous matrix; or the silicon-containing precursor and the heteroatom-containing precursor are simultaneously contacted with the porous matrix; or the silicon-containing precursor and a mixed gas containing the silicon-containing precursor and the heteroatom-containing precursor are alternately contacted with the porous matrix, and preferably, the silicon-containing precursor is continuously contacted with the porous matrix, in which process the heteroatom-containing precursor is intermittently introduced.

In some examples, the silicon-based composite material has a specific surface area of 0.1~50 m²/g and a pore volume of 0.001~0.5 cm³/g. Preferably, in some examples, the silicon-based composite material has a specific surface area of 0.1~5 m²/g and a pore volume of 0.001~0.05 cm³/g. A too high specific surface area tends to cause increased side reactions of the composite material in lithium battery application and reduced initial Coulombic efficiency. A too low specific surface area is hard to achieve.

In some examples, the silicon-based composite material has a true density of 1.3~3.0 g/cm³ and a closed-pore volume of 0.01~0.30 cm³/g.

In the present invention, a skeleton density of material obtained by helium specific gravity method is called as true density of the material. The closed-pore volume is calculated by subtracting a volume of a corresponding fully compact material composed of the same element from a skeleton volume of the composite material, wherein the skeleton volume of the composite material is reciprocal of the true density of the composite material. The skeleton volume of the composite material is composed of two parts, one part being the volume of the corresponding fully compact material composed of the same element, and the other part being the closed-pore volume; the volume of the fully compact material is reciprocal of its true density (namely, theoretical density of the fully compact material composed of the same element). According to this, the closed-pore volume of the composite material can be calculated. A certain amount of closed-pore volume can provide a buffer space for the expansion of silicon in the composite material during lithium intercalation and improve the cycle stability of the composite material. However, too many closed pores will cause decreased structural strength of the composite material, decreased compacted density, and poor battery processability, and meanwhile the decreased structural strength will also lead to decreased cycle stability of the composite material. Therefore, it is necessary to control the true density and closed-pore volume of the composite material to be within certain ranges.

Typically, but not by way of limitation, in some examples, the true density of the silicon-based composite material obtained in the present invention is, for example, 1.3 g/cm³, 1.5 g/cm³, 1.8 g/cm³, 2.0 g/cm³, 2.5 g/cm³, 3.0 g/cm³ or a range value between any two thereof. In some examples, the closed-pore volume may be 0.01 cm³/g, 0.05 cm³/g, 0.1 cm³/g, 0.15 cm³/g, 0.2 cm³/g, 0.25 cm³/g, 0.30 cm³/g or a range value between any two thereof.

In some examples, the silicon-based composite material particles have *d*_{*V,*50} of 5~20 µm and a span (*d*_{*V,*90}*-d*_{*V,*10})/*d*_{*V,*50} of 0.6~2.0. Preferably, the silicon-based composite material has a median particle size *d*_{*V,*50} of 6~12 µm and a span (*d*_{*V,*90}*-d*_{*V,*10})/*d*_{*V,*50} of 0.7~1.2. The silicon-based composite material needs to have a suitable granular composition to exhibit better lithium battery processing and application performances.

In some examples, a compacted specific surface area of the silicon-based composite material is 1 to 20 times a specific surface area, preferably 1~10 times, more preferably 1~5 times. The compacted specific surface area refers to a specific surface area of the silicon-based composite material after being compacted under a pressure of 4000 kgf/cm². The compacted specific surface area is a way of evaluating structural stability of materials. The lower the compacted specific surface area of a material is, the smaller the ratio of the compacted specific surface area to the specific surface area is, and then the material is more compact-resistant and has higher compressive strength, which will improve mechanical stability of the composite material.

In some examples, a content of silicon element in the silicon-based composite material is 10~90 %. Preferably, in some examples, the content of the silicon element in the silicon-based composite material is 30~70%.

In some examples, the silicon-based composite material further includes a coating layer located on the surface of the silicon-based composite material. Preferably, in some examples, a material of the coating layer is at least one selected from the group consisting of a solid electrolyte, a conductive polymer, a carbonaceous material, a metal, an alloy, a metal oxide, a metal hydroxide, a halogen-containing compound, a nitrogen-containing compound, a phosphorus-containing compound, a boron-containing compound and a sulfur-containing compound. Further preferably, in some examples, the material of the coating layer is a carbonaceous material.

In the fourth aspect, the present invention provides a negative electrode, wherein the negative electrode contains a negative electrode active material, and wherein the negative electrode active material includes the silicon-based composite material according to the third aspect of the present invention.

In the fifth aspect, the present invention provides a battery, wherein the battery includes a positive electrode, a negative electrode, a separator and an electrolytic solution, and wherein the negative electrode contains a negative electrode active material, and the negative electrode active material includes the silicon-based composite material according to the third aspect of the present invention.

In the battery provided in the present invention, by using the silicon-based composite material with a region-controllable silicon content, under conditions of a high silicon content and a high capacity, the expansion of silicon in particles during lithium intercalation can be reduced, the cycle stability and structural stability of the secondary battery can be improved, and the development of downstream industries can be promoted.

The present invention is further illustrated below with specific examples and comparative examples, but it is to be understood that these examples are merely used for giving more detailed description and should not be construed as limiting the present invention in any form. The examples and comparative examples in the present invention, for which specific conditions are not specified, are carried out under conventional conditions or manufacturer-recommended conditions. Where manufacturers of reagents or apparatus used are not specified, they are commercially available conventional products.

### Example 1

The present example provides a composite porous material, of which a preparation process was as follows.

Sucrose and lignin were mixed in a mass ratio of 1:1, and resulting mixture was heated from a room temperature to 900 °C at 2 °C/min in a N₂ atmosphere, and kept at this temperature for 2 h. CO₂ was introduced instead, and the mixture was kept for another 2 h. Resultant was cooled, crushed and classified to render the composite porous material.

### Example 2

The present example provides a composite porous material, of which a preparation process was as follows.

Sucrose was heated from a room temperature to 900 °C at 2 °C/min in a N₂ atmosphere, kept at this temperature for 2 h, and then crushed and classified to render a core carbon material. The core carbon material was mixed with asphalt in a mass ratio of 25:1, and resulting mixture was heated from a room temperature to 900 °C at 2 °C/min in a N₂ atmosphere. CO₂ was introduced instead, and the mixture was kept for another 2 h. Resultant was cooled, crushed and classified to render the composite porous material.

### Example 3

The present example provides a composite porous material, of which a preparation process was as follows.

Sucrose and commercially available porous aluminum oxide were mixed in a mass ratio of 1:1, and resulting mixture was heated from a room temperature to 900 °C at 2 °C/min in a N₂ atmosphere, and kept at this temperature for 2 h. CO₂ was introduced instead, and the mixture was kept for another 2 h. Resultant was cooled, crushed and classified to render an aluminum oxide-sucrose carbon composite material. The aluminum oxide-sucrose carbon composite material was stirred in a 0.01M HCl solution for 2 h, filtered, washed and dried successively, and then sintered at 400 °C to render the composite porous material.

### Example 4

The present example provides a composite porous material, of which a preparation process was as follows.

Sucrose and lignin were mixed in a mass ratio of 1:1, and resulting mixture was heated from a room temperature to 800 °C at 2 °C/min in a N₂ atmosphere, and kept at this temperature for 2 h. Resulting material was crushed and classified, mixed with asphalt in a mass ratio of 50:1. Resulting mixture was heated to 900 °C in a N₂ atmosphere, and kept for 2 h. Then CO₂ was introduced, and the mixture was kept for 2 h, to render the composite porous material.

### Example 5

The present example provides a composite porous material, of which a preparation process was as follows.

Sucrose and lignin were mixed in a mass ratio of 1:1, and resulting mixture was heated from a room temperature to 800 °C at 2 °C/min in a N₂ atmosphere, and kept at this temperature for 2 h, to render the composite porous material.

### Example 6

The present example provides a composite porous material, of which a preparation process was as follows.

Sucrose and lignin were mixed in a mass ratio of 1:1, and resulting mixture was preoxidized at 200 °C and then heated from a room temperature to 900 °C at 2 °C/min in a N₂ atmosphere, and kept at this temperature for 2 h. CO₂ was introduced, and the mixture was kept for 3 h at 1000 °C, to render the composite porous material.

### Comparative Example 1

The present comparative example provides sucrose carbon material, of which a preparation process was as follows: sucrose was heated from a room temperature to 900 °C at 2 °C/min in a N₂ atmosphere, and kept at this temperature for 2 h; CO₂ was introduced instead, and the mixture was kept for another 2 h; and resultant was cooled, crushed and classified to render the sucrose carbon.

### Comparative Example 2

The present comparative example provides lignin carbon material, of which a preparation process was as follows: lignin was heated from a room temperature to 900 °C at 2 °C/min in a N₂ atmosphere, and kept at this temperature for 2 h; CO₂ was introduced instead, and the mixture was kept for another 2 h; and resultant was cooled, crushed and classified to render the lignin carbon.

### Comparative Example 3

The present comparative example provides a coconut shell carbon material, which is commercially available, wherein the coconut shell carbon material has an iodine number of 800 and particles of 20~60 meshes.

### Comparative Example 4

The present comparative example provides a porous aluminum oxide, which is the same as the porous aluminum oxide used in Example 3.

### Test Example 1

The composite porous materials obtained in Examples 1~6 and the porous materials provided in Comparative Examples 1~4 were respectively measured for their pore volumes and mass ratios of various parts in the composite porous materials.

The pore volume was calculated according to an adsorbed amount at the maximum partial pressure of N₂ adsorption (*p*/*p*₀ > 0.99).

The pore volumes of the porous material A and the porous material B in the composite porous materials were obtained by calculation: the pore volumes were separately measured for the porous material A and the porous material B constituting the structure, to obtain the pore volumes of various parts in the composite porous materials.

In the composite porous materials, the mass ratios of various parts were also obtained by separate carbonization and/or activation masses of various parts.

Results obtained are shown in Table 1 below.

**Table 1 Table of Property Data of Composite Porous Materials**

| | Structure | Pore Volume of Porous Material A (cm³/g) | Pore Volume of Porous Material B (cm³/g) | Pore Volume of Porous Material C (cm³/g) | Mass Ratio of Porous Material A/ Porous Material B/ Porous Material C |
|---|---|---|---|---|---|
| Example 1 | AB network structure | 1.0 | 0.6 | / | 0.5:1 |
| Example 2 | A@B core-shell structure | 1.0 | 0.2 | / | 50:1 |
| Example 3 | AB network structure | 1.0 | 0.4 | / | 0.5:1 |
| Example 4 | AB@C network-core-shell structure | 1.0 | 0.6 | 0.2 | 33:66:1 |
| Example 5 | AB network structure | 0.25 | 0.18 | / | 0.5:1 |
| Example 6 | AB network structure | 2.0 | 1.2 | / | 0.5:1 |
| Comparative Example 1 | / | 1.0 | / | / | / |
| Comparative Example 2 | / | 0.6 | / | / | / |
| Comparative Example 3 | / | 0.8 | / | / | / |
| Comparative Example 4 | / | 0.4 | / | / | / |

### Example 7

The present example provides a silicon-based composite material, of which a process was as follows.

The composite porous material obtained in Example 1 was placed in a tubular furnace, and heated from a room temperature to 600 °C at 2 °C/min in a N₂ atmosphere; then the atmosphere was changed into 20% SiH₄-N₂ mixed gas, and the composite porous material was kept in 20% SiH₄-N₂ mixed atmosphere at 600 °C for 30 h; and the atmosphere was changed into N₂ atmosphere, and the material was naturally cooled, crushed and classified, to render the silicon-based composite material with *d*_{*V,*50} of 10 µm and a span of 0.88.

### Example 8

The present example provides a silicon-based composite material, of which a process was as follows.

The composite porous material obtained in Example 2 was placed in a tubular furnace, and heated from a room temperature to 600 °C at 2 °C/min in a N₂ atmosphere; then the atmosphere was changed into 20% SiH₄-N₂ mixed gas, and the composite porous material was kept in 20% SiH₄-N₂ mixed atmosphere at 600 °C for 30 h; and the atmosphere was changed into N₂ atmosphere, and the material was naturally cooled, crushed and classified, to render the silicon-based composite material with *d*_{*V,*50} of 10 µm and a span of 0.88.

### Example 9

The present example provides a silicon-based composite material, of which a process was as follows.

The composite porous material obtained in Example 3 was placed in a tubular furnace, and heated from a room temperature to 600 °C at 2 °C/min in a N₂ atmosphere; then the atmosphere was changed into 20% SiH₄-N₂ mixed gas, and the composite porous material was kept in 20% SiH₄-N₂ mixed atmosphere at 600 °C for 30 h; and the atmosphere was changed into N₂ atmosphere, and the material was naturally cooled, crushed and classified, to render the silicon-based composite material with *d*_{*V,*50} of 10 µm and a span of 0.88.

### Example 10

The present example provides a silicon-based composite material, of which a process was as follows.

The composite porous material obtained in Example 4 was placed in a tubular furnace, and heated from a room temperature to 600 °C at 2 °C/min in a N₂ atmosphere; then the atmosphere was changed into 20% SiH₄-N₂ mixed gas, and the composite porous material was kept in 20% SiH₄-N₂ mixed atmosphere at 600 °C for 30 h; and the atmosphere was changed into N₂ atmosphere, and the material was naturally cooled, crushed and classified, to render the silicon-based composite material with *d*_{*V,*50} of 10 µm and a span of 0.88.

### Example 11

The present example provides a silicon-based composite material, of which a process was as follows.

The composite porous material obtained in Example 5 was placed in a tubular furnace, and heated from a room temperature to 600 °C at 2 °C/min in a N₂ atmosphere; then the atmosphere was changed into 20% SiH₄-N₂ mixed gas, and the composite porous material was kept in 20% SiH₄-N₂ mixed atmosphere at 600 °C for 5 h; N₂ purging was performed for 2 h; the atmosphere was changed into 10% C₂H₂-N₂ mixed gas, and the material was kept for 2 h; the atmosphere was changed into N₂ atmosphere, and the material was naturally cooled, crushed and classified, to render the silicon-based composite material with *d*_{*V,*50} of 10 µm and a span of 0.88.

### Example 12

The present example provides a silicon-based composite material, of which a process was as follows.

The composite porous material obtained in Example 6 was placed in a tubular furnace, and heated from a room temperature to 600 °C at 2 °C/min in a N₂ atmosphere; then the atmosphere was changed into 20% SiH₄-N₂ mixed gas, and the composite porous material was kept in 20% SiH₄-N₂ mixed atmosphere at 600 °C for 50 h; and the atmosphere was changed into N₂ atmosphere, and the material was naturally cooled, crushed and classified, to render the silicon-based composite material with *d*_{*V,*50} of 10 µm and a span of 0.88.

### Example 13

The present example provides a silicon-based composite material. Different from Example 7, the silicon-based composite material particles obtained were dispersed in a 5% AlPO₄ aqueous solution, with a mass ratio of the silicon-based composite material to AlPO₄ being 1:5, subjected to ultrasonic treatment, stirring and filtration to remove excess liquid, dried in an 80 °C oven, and then sintered at 400 °C for 2 h in a N₂ atmosphere, to render an AlPO₄-coated silicon-based composite material.

### Example 14

The composite porous material obtained in Example 1 was placed in a tubular furnace, and heated from a room temperature to 600 °C at 2 °C/min in a N₂ atmosphere; then the atmosphere was changed into 20% SiH₄-N₂ mixed gas, and the composite porous material was kept in 20% SiH₄-0.01%O₂-N₂ mixed atmosphere at 600 °C for 30 h; and the atmosphere was changed into N₂ atmosphere, and the material was naturally cooled, crushed and classified, to render the silicon-based composite material with *d*_{*V,*50} of 10 µm and a span of 0.88.

### Comparative Example 5

The porous material provided in Comparative Example 1 was placed in a tubular furnace, and heated from a room temperature to 600 °C at 2 °C/min in a N₂ atmosphere; then the atmosphere was changed into 20% SiH₄-N₂ mixed gas, and the porous material was kept in 20% SiH₄-N₂ mixed atmosphere at 600 °C for 30 h; and the atmosphere was changed into N₂ atmosphere, and the material was naturally cooled, crushed and classified, to render the silicon-based composite material with *d*_{*V,*50} of 10 µm and a span of 0.88.

### Comparative Example 6

The porous material provided in Comparative Example 2 was placed in a tubular furnace, and heated from a room temperature to 600 °C at 2 °C/min in a N₂ atmosphere; then the atmosphere was changed into 20% SiH₄-N₂ mixed gas, and the porous material was kept in 20% SiH₄-N₂ mixed atmosphere at 600 °C for 20 h; and the atmosphere was changed into N₂ atmosphere, and the material was naturally cooled, crushed and classified, to render the silicon-based composite material with *d*_{*V,*50} of 10 µm and a span of 0.88.

### Comparative Example 7

The porous material provided in Comparative Example 3 was placed in a tubular furnace, and heated from a room temperature to 600 °C at 2 °C/min in a N₂ atmosphere; then the atmosphere was changed into 20% SiH₄-N₂ mixed gas, and the porous material was kept in 20% SiH₄-N₂ mixed atmosphere at 600 °C for 25 h; and the atmosphere was changed into N₂ atmosphere, and the material was naturally cooled, crushed and classified, to render the silicon-based composite material with *d*_{*V,*50} of 10 µm and a span of 0.88.

### Comparative Example 8

The porous material provided in Comparative Example 4 was placed in a tubular furnace, and heated from a room temperature to 600 °C at 2 °C/min in a N₂ atmosphere; then the atmosphere was changed into 20% SiH₄-N₂ mixed gas, and the porous material was kept in 20% SiH₄-N₂ mixed atmosphere at 600 °C for 15 h; and the atmosphere was changed into N₂ atmosphere, and the material was naturally cooled, crushed and classified, to render the silicon-based composite material with *d*_{*V,*50} of 10 µm and a span of 0.88.

### Test Example 2

The silicon-based composite materials obtained in Examples 7~14 and Comparative Examples 5~8 were measured for data of silicon deposition, and data obtained are shown in Table 2 below.

**Table 2 Table of Data of Silicon Contents of Silicon-based Composite Materials**

| | Proportion of Mass of Silicon Deposited in Region A in Total Mass of Region A (wt. %) | Proportion of Mass of Silicon Deposited in Region B in Total Mass of Region B (wt. %) | Total Silicon Content in Composite Material (wt.%) |
|---|---|---|---|
| Example 7 | 56.2 | 47.1 | 50.1 |
| Example 8 | 56.2 | 12.5 | 55.8 |
| Example 9 | 56.2 | 39.2 | 42.9 |
| Example 10 | 56.2 | 47.1 | 46.8 |
| Example 11 | 10.1 | 5.2 | 7.2 |
| Example 12 | 68.5 | 57.4 | 62.4 |
| Example 13 | 56.2 | 47.1 | 47.6 |
| Example 14 | 55.9 | 46.8 | 50.2 |
| Comparative Example 5 | 56.2 | / | 56.2 |
| Comparative Example 6 | 47.1 | / | 47.1 |
| Comparative Example 7 | 52.0 | / | 52.0 |
| Comparative Example 8 | 39.2 | / | 39.2 |

### Test Example 3

The silicon-based composite materials obtained in Examples 7~14 and Comparative Examples 5~8 were tested for electrochemical performances.

The silicon-based composite materials obtained in Examples 7~14 and Comparative Examples 5~8 were negative electrode active materials, and were respectively prepared into negative electrode plates (negative plates). The negative electrode plates were prepared into CR2032 type button batteries by a conventional method, and the batteries were tested for electrical performances.

Specific test methods were as follows.
(1) Half-cell assembly: CR2032 type button battery was assembled in a glove box, wherein a lithium metal sheet was a counter electrode, a polypropylene microporous membrane was a separator, an electrolytic solution was LiPF₆ dissolved in a mixed solution of ethyl carbonate (EC) and diethyl carbonate (DEC) (in a volume ratio of EC:DEC being 1:1), wherein concentration of LiPF₆ was 1 mol/L.
   A charge-discharge test was carried out on the battery using a LAND battery test system.
(2) Test for cycling capacity per gram and initial efficiency: after standing for 6 h, the CR2032 type button battery was discharged to 0.005 V at 0.05 C and then discharged to 0.005 V at 0.01 C; after standing for 5 min, the battery was charged to 1.5 V at 0.05 C constant current. Initial lithium deintercalation capacity per gram was the capacity per gram of the electrode material (or called as mass specific capacity), and a ratio of initial lithium deintercalation capacity to initial lithium intercalation capacity was initial Coulombic efficiency of the battery.
(3) Electrode-plate expansion rate test: after standing for 6 h, the CR2032 type button battery was discharged to 0.005 V at 0.05 C and then discharged to 0.005 V at 0.01 C; then the button battery was disassembled in the glove box, the electrode plate was washed with DEC, and a thickness of the electrode plate was measured. The expansion rate was calculated by: (thickness of electrode plate in initial fully-charged state - thickness of fresh electrode plate)/ thickness of fresh electrode plate × 100%.

Full battery preparation and electrochemical performance test:
The silicon-based composite materials obtained in Examples 7~14 and Comparative Examples 5~8 were negative electrode active materials. Electrode plates containing the negative electrode active materials were prepared into pouch batteries by a conventional method, and electrical performance test was carried out. The pouch batteries were prepared in a dehumidification room with a dew point of -45 °C. Charge-discharge cycle test was carried out on the batteries using a LANBTS battery test system, and results are shown in Table 3. A specific test method was as follows.
(1) Fabrication of positive electrode plate: a positive electrode active material LiCoO₂, a conductive agent Super P, a binder PVDF and a solvent NMP were stirred and mixed well in a mass ratio of 92:3:5:150, uniformly coated onto a positive electrode current collector, and then dried at 80 °C to render the positive electrode plate.
(2) Fabrication of negative electrode plate: a negative electrode active material, the conductive agent Super P, a binder polyacrylic acid and a solvent deionized water were stirred and mixed well in a mass ratio of 95:1:4:120, uniformly coated onto a negative electrode current collector, and then dried at 100 °C to render the negative electrode plate.
(3) The positive electrode plate and the negative electrode plate were laminated in a square shape and isolated by a polypropylene separator to prepare a battery cell. The battery cell was packaged in an aluminum plastic pocket, into which an electrolytic solution with a corresponding capacity was injected. The aluminum plastic pocket was vacuum-sealed to render the pouch battery. The electrolytic solution was LiPF₆ in a mixed solution of EC and DEC, wherein concentration of LiPF₆ was 1 mol/L, and a volume ratio of EC to DEC was 1:1.
(4) Formation and capacity grading: after the injection of the electrolytic solution and sealing, the battery started to undergo formation. After standing in a 25 °C incubator for 12 h, the battery was charged to 3.3 V at 0.02 C constant current, followed by standing for 30 min, charged to 3.8 V at 0.025 C constant current, followed by standing for 10 min, and charged to 4.2 V at 0.33 C constant current; after the formation of the battery, the vacuum pocket was cut, and then capacity grading was carried out, by charging to 4.45 V at 0.33 C constant current, standing for 10 min, discharging to 3 V at 1 C constant current, standing for 10 min, and discharging to 3 V at 0.33 C constant current, and then the capacity grading was ended. A ratio of discharge capacity to charge capacity in the formation and capacity grading of the pouch battery was the initial efficiency of the battery.
(5) 25 °C cycle test: the battery was placed in a 25 °C incubator, charged to 4.45 V at 1 C constant current, charged to 0.1 C current at 4.45 V constant voltage; after standing for 10 min, the battery was discharged to 3.0 V at 1 C constant current, and stood for 10 min. The above charge and discharge steps were repeated, until the discharge capacity was lower than 80% of the discharge capacity of first cycle, and in this case, the number of cycles obtained was cycle life of the pouch battery. 100-cycle capacity retention rate was recorded.

Data obtained are shown in Table 3 below.

**Table 3 Table of Data of Electrochemical Performances of Silicon-based Composite Materials**

| Sample | Capacity Per Gram @1.5 V (mAh/g) | Initial Coulombic Efficiency @1.5 V (%) | Expansion Rate of Electrode Plate (%) | 100-Cycle Capacity Retention Rate of Full Battery (%) |
|---|---|---|---|---|
| Example 7 | 1921 | 93.6 | 72.1 | 97.8 |
| Example 8 | 2065 | 93.8 | 74.3 | 98.6 |
| Example 9 | 1245 | 88.9 | 43.5 | 99.5 |
| Example 10 | 1801 | 93.1 | 70.5 | 98.1 |
| Example 11 | 588 | 91.6 | 32.1 | 99.2 |
| Example 12 | 2320 | 94.5 | 89.2 | 94.5 |
| Example 13 | 1809 | 92.8 | 72.5 | 98.9 |
| Example 14 | 1886 | 93.1 | 68.5 | 99.2 |
| Comparative Example 5 | 2086 | 93.2 | 102.5 | 89.2 |
| Comparative Example 6 | 1842 | 92.9 | 92.8 | 91.5 |
| Comparative Example 7 | 1965 | 93.1 | 99.2 | 90.2 |
| Comparative Example 8 | 1025 | 82.9 | 52.1 | 90.5 |

In Examples 1~6, through different combinations of different precursors, the composite porous materials of different structures, such as the AB network structure, the A@B core-shell structure and the AB@C network-core-shell composite structure, and different regional pore volumes were obtained. In Comparative Examples 1 and 2, a single carbon source precursor was used to prepare the porous material with a single pore volume. In Comparative Examples 3 and 4, commercially available porous materials, also of a single component and a single pore volume, were used.

In Comparative Examples 5~8, the silicon-based composite materials were prepared from the porous materials in Comparative Examples 1~4 as the porous matrix. In Examples 7~14, the composite porous materials having a regionally distributed pore volume obtained in Examples 1~6 were used as the composite porous matrix, to perform silicon deposition, so as to obtain the silicon-based composite materials.

By combining Table 1, Table 2 and Table 3, it can be seen that, compared with the silicon-based composite materials prepared from the porous materials with a single pore volume in Comparative Examples 5~8, the silicon-based composite materials in Examples 7~14 had lower expansion rate of electrode plate and 100-cycle capacity retention rate. The 100-cycle capacity retention rates of full battery of the silicon-based composite materials in Comparative Examples 5~8 were all 92% or below; the 100-cycle capacity retention rates of full battery of the silicon-based composite materials in Examples 7~14 were all 97% or above. Exceptionally, in Example 12, as the composite porous material in Example 6 with a high pore volume was used as the porous matrix for performing the silicon deposition, the composite material had a relatively high silicon content (62.4%), 1.5 V capacity per gram was up to 2320 mAh/g, and the 100-cycle capacity retention rate thereof was relatively low, which was 94.5%, still higher than those in the comparative examples. The composite porous material used in Example 11 had a relatively low pore volume, and thus the silicon content in the obtained silicon-based composite material was relatively low, and the capacity per gram was also relatively low.

Examples 7~12 correspondingly used the composite porous materials of Examples 1~6 as a composite porous matrix; and Example 13 and Example 14 both used the composite porous material of Example 1 as a composite porous matrix. Example 13 was different from Example 7 in that the silicon-based composite material was coated by an inorganic electrolyte, and the 100-cycle capacity retention rate was further improved. In Example 14, the oxygen heteroatoms were introduced during the silicon deposition, to form Si-O-Si or SiOₓ local region in the silicon-based composite material, and stronger Si-O bonds constrained the silicon expansion during intercalation lithium, which further reduced the electrode-plate expansion rate of the material, improved the cycle stability of the silicon-based composite material, and achieved the 100-cycle capacity retention rate of 99.2%.

### Test Example 4

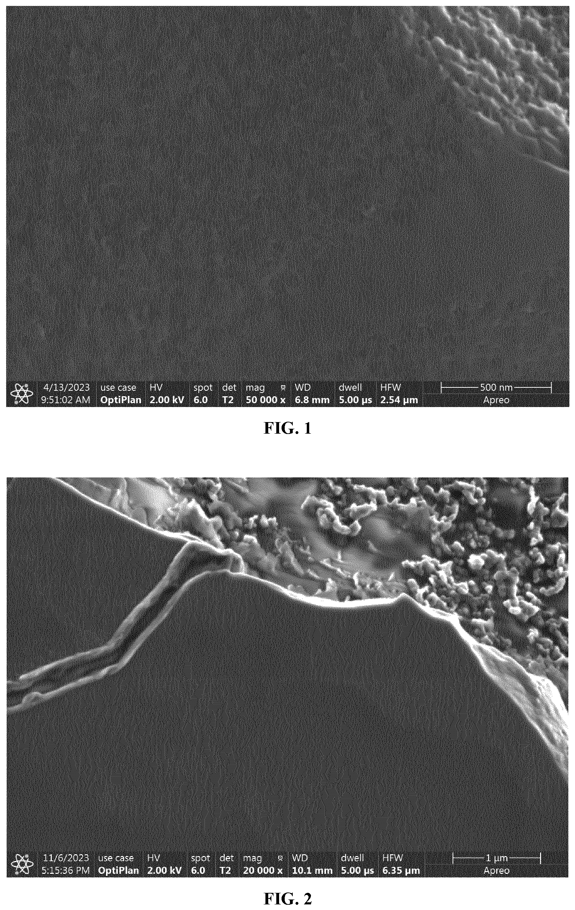

Scanning electron microscopy was performed on the composite porous material provided in Example 1, and an SEM image obtained is shown in FIG. 1. It can be seen from FIG. 1 that two regions of different pore structures are distributed in the composite porous material, wherein an upper left corner and a lower right corner in the image are loose porous regions of the porous material A, and a dense region in the middle is the porous material B. Due to limitation of SEM resolution, the micropores in the composite porous material cannot be observed. According to common general knowledge in the art, in the composite porous material in Example 1, both the porous material A and the porous material B include micropores. At a larger observation scale, the porous material A and the porous material B are distributed in a staggered manner and form the AB network structure.

Scanning electron microscopy was performed on the composite porous material provided in Example 2, and an SEM image obtained is shown in FIG. 2. It can be seen from FIG. 2 that interior and outer shell of the composite porous material exhibit different degrees of density and the A@B core-shell structure is formed.

Finally, it should be noted that various examples above are merely used for illustrating the technical solutions of the present invention, rather than limiting the present invention. Although detailed description is made to the present invention with reference to various preceding examples, those ordinarily skilled in the art should understand that they still could modify the technical solutions recited in various preceding examples, or make equivalent substitutions to some or all of the technical features therein. These modifications or substitutions do not make corresponding technical solutions essentially depart from the scope of the technical solutions of various examples of the present invention.

### INDUSTRIAL APPLICABILITY

The composite porous material provided in the present invention can be applied to battery negative electrode materials, hydrogen storage materials, adsorption materials, catalyst supports, energy-saving materials, separation materials, the drug loading or other fields, and the composite porous material with better performances is provided to the above fields, which promotes the development of the above fields and broadens application ranges of downstream industries.

## Claims

1. A composite porous material, **characterized in that** the composite porous material contains composite porous material particles, and the composite porous material particles are obtained by compounding two or more porous materials of different pore structures;
the composite porous material particles at least comprise a porous material A and a porous material B, and distribution of the porous material A and the porous material B in the composite porous material particles is not limited; and
a pore volume of the porous material A is greater than that of the porous material B.

2. The composite porous material according to claim 1, wherein the porous material A is a porous carbon material; and the porous material B is at least one of a porous carbon material, a porous metal oxide, a porous metal oxysalt or a porous metal; and
preferably, the porous carbon material comprises a porous carbon material prepared with a polymer, a biomass or fossil fuel as a precursor; the porous metal oxide comprises at least one of porous aluminum oxide, porous silicon dioxide and porous magnesium oxide; and the porous metal comprises at least one of foamed nickel, porous titanium and porous copper.

3. The composite porous material according to claim 1, wherein a ratio of a mass of the porous material A to that of the porous material B is from 0.1 to 200; and preferably, in the composite porous material particles,
the porous material A and the porous material B are distributed in a staggered manner and form an AB network structure, wherein the ratio of the mass of the porous material A to that of the porous material B is from 0.1 to 10;
or the porous material B wraps the porous material A to form an A@B core-shell structure, wherein the ratio of the mass of the porous material A to that of the porous material B is from 20 to 200;
or the porous material A and the porous material B are distributed in a staggered manner and form an AB network structure, and a porous material C is present and wraps the AB network structure to form an AB@C network-core-shell composite structure, wherein the ratio of the mass of the porous material A to that of the porous material B is from 0.1 to 10, and a ratio of a total mass of the porous material A and the porous material B to a mass of the porous material C is from 20 to 200.

4. The composite porous material according to claim 1, wherein the pore volume of the porous material A is 0.3~3.0 cm³/g, and the pore volume of the porous material B is 0.05~0.65 cm³/g;
preferably, in the porous material A, a proportion of pores with a pore size less than 10 nm in a total pore volume of the porous material A is 60~100 %; and
preferably, in the porous material B, a proportion of pores with a pore size less than 10 nm in a total pore volume of the porous material B is 60~100 %.

5. Use of the composite porous material according to any one of claims 1~4 in a battery negative electrode material, a hydrogen storage material, an adsorption material, a catalyst support, an energy-saving material, a separation material or drug loading.

6. A silicon-based composite material, **characterized in that** the silicon-based composite material contains silicon-based composite material particles, and the silicon-based composite material particles contain a composite porous matrix and a nano-silicon material dispersed in pore channels of the porous matrix, wherein the composite porous matrix at least contains a component A and a component B, and correspondingly, the silicon-based composite material particles at least comprise a region A and a region B, wherein the region A comprises the component A of the composite porous matrix and the nano-silicon material dispersed in the pore channels thereof, and the region B comprises the component B of the composite porous matrix and the nano-silicon material dispersed in the pore channels thereof; and a content of the nano-silicon material, in percentage by mass, in the region A is greater than a content of the nano-silicon material, in percentage by mass, in the region B; and
the composite porous matrix is of the composite porous material according to any one of claims 1~4.

7. The silicon-based composite material according to claim 6, wherein the region A and the region B are distributed in a staggered manner and form an AB network structure, and wherein a ratio of a mass of the region A to that of the region B is from 0.1 to 10;
or the region B wraps the region A to form an A@B core-shell structure, wherein a ratio of a mass of the region A to that of the region B is from 20 to 200;
or the region A and the region B are distributed in a staggered manner and form an AB network structure, and a region C is present and wraps the AB network structure to form an AB@C network-core-shell composite structure, wherein a ratio of a mass of the region A to that of the region B is from 0.1 to 10, and a ratio of a total mass of the region A and the region B to a mass of the region C is from 20 to 200

8. The silicon-based composite material according to claim 6, wherein the nano-silicon material is obtained by chemical vapor deposition of a silicon-containing precursor on the composite porous matrix at 150~1000 °C; preferably, the silicon-containing precursor is one or more selected from the group consisting of monosilane, disilane, trisilane, halosilane, polysilane, silole and derivatives thereof, and silafluorene and derivatives thereof.

9. The silicon-based composite material according to claim 6, wherein a content of the nano-silicon material in the region A is 30~90 wt.%; and a content of the nano-silicon material in the region B is 0~50 wt.%.

10. The silicon-based composite material according to claim 6, wherein the silicon-based composite material further comprises a heteroatom X deposited in the pore channels of the composite porous material, and the heteroatom X is a non-silicon element;
preferably, the heteroatom X belongs to non-metal elements;
preferably, the non-metal elements comprise at least one of B, N, P, O and S;
preferably, in the silicon-based composite material, a content of the heteroatom X is 0~10 wt.%; further preferably, the content of the heteroatom X is 0~5 wt.%; and
preferably, the heteroatom X in the pore channels of the composite porous material is obtained by chemical vapor deposition of a silicon-containing precursor and a heteroatom-containing precursor on the composite porous matrix at 150~1000 °C.

11. The silicon-based composite material according to claim 6, wherein the silicon-based composite material has a specific surface area of 0.1~50 m²/g and a pore volume of 0.001~0.5 cm³/g; preferably, the silicon-based composite material has the specific surface area of 0.1~5 m²/g and the pore volume of 0.001~0.05 cm³/g;
and/or the silicon-based composite material has a true density of 1.3~3.0 g/cm³ and a closed-pore volume of 0.01~0.30 cm³/g;
and/or the silicon-based composite material particles have *d*_{*V,*50} of 5~20 µm and a span (*d*_{*V,*90}*-d*_{*V,*10})/*d*_{*V,*50} of 0.7~2.0; preferably, the silicon-based composite material has a median particle size *d*_{*V,*50} of 6~12 µm and a span (*d*_{*V,*90}*-d*_{*V,*10})/*d*_{*V,*50} of 0.7~1.2;
and/or a compacted specific surface area of the silicon-based composite material is 1 to 20 times a specific surface area, preferably 1~10 times, more preferably 1~5 times;
and/or a content of silicon element in the silicon-based composite material is 10~90 wt.%; preferably, the content of the silicon element in the silicon-based composite material is 30~70 wt. %;
and/or the silicon-based composite material further comprises a coating layer located on a surface of the silicon-based composite material; preferably, a material of the coating layer is at least one selected from the group consisting of a solid electrolyte, a conductive polymer, a carbonaceous material, a metal, an alloy, a metal oxide, a metal hydroxide, a halogen-containing compound, a nitrogen-containing compound, a phosphorus-containing compound, a boron-containing compound and a sulfur-containing compound; further preferably, the material of the coating layer is a carbonaceous material.

12. A negative electrode, **characterized in that** the negative electrode contains a negative electrode active material, and the negative electrode active material comprises the silicon-based composite material according to any one of claims 6~11.

13. A battery, **characterized in that** the battery comprises a positive electrode, a negative electrode, a separator and an electrolytic solution, and wherein the negative electrode contains a negative electrode active material, and the negative electrode active material comprises the silicon-based composite material according to any one of claims 6~11.
